# EUROPEAN PATENT SPECIFICATION

(11) **EP 0 375 627 B1**
(45) Date of publication and mention of the grant of the patent: **12.05.1993**
(21) Application number: 89830415.9
(22) Date of filing: 25.09.1989
(51) Int. Cl.: B22F 1/00, C04B 35/00

(54) **A process for pre-treating powders with a solid lubricant and heat in preparation for compacting operations**
Verfahren zur Vorbehandlung von Pulver mit festem Schmiermittel und mit Wärme zur Vorbereitung der Verdichtungsvorgänge
Procédé de prétraitement de poudres à l'aide d'un lubrifiant solide et de chaleur pour préparer des opérations de compactage

(30) Priority: 28.10.1988 IT 4851088
(43) Date of publication of application: 27.06.1990
(73) Proprietor: NUOVA MERISINTER S.p.A., 80022 Arzano (NA) (IT); Krebsöge Sinterholding GmbH, 42477 Radevormwald (DE)
(72) Inventor: Musella, Vincenzo c/o Nuova Merisinter S.p.A., I-80022 Arzano (NA) (IT); D'Angelo, Mario c/o Nuova Merisinter S.p.A., I-80022 Arzano (NA) (IT)
(74) Representative: Taliercio, Antonio

(56) References cited:
- FR-A- 1 174 315
- US-A- 3 725 521
- US-A- 4 765 950
- PATENT ABSTRACTS OF JAPAN, vol. 8, no. 37 (M-277), 17-02-1984; & JP-A-58 193 302 (HITACHI) 11-11-1983

## Description

### DISCLOSURE OF THE INVENTION

This invention relates to the general field of powder metallurgy and it is particularly concerned with a preliminary treatment of powders to be employed for sintering operations in order to improve on the quality of the articles so obtained.

As is well known, the usual powder metallurgy practice employs raw materials in the form of powders suitably prepared, compacting such material by means of one of the various processes normally employed and then treating the product so obtained adopting suitable conditions of temperature, pressure and composition of the environmental atmosphere in order to obtain a product of desired physico-chemical and technological characteristics.

It is well known to those who are skilled in the art that the final characteristics obtained remarkably depend on the degree of thickening obtained by means of the forming operation. Because of that reason, many processes have been introduced into the industrial practice both for improving on the capability of raw materials of undergoing increase in density, and for obtaining improvements through the addition of some agents to the mixtures employed.

It is common practice to add to the mixtures of powders to be compacted some compounds that substantially are not necessary for obtaining the final product, but capable of giving some lubricating effect so as to reduce the forces necessary to give the desired degree of thickening. Lubricants commonly employed are of various types: among the most widespread lubricants, lithium stearates, zinc stearates as well the stearates of other metals, paraffins, waxes, natural or synthetic fat derivatives are employed. Such lubricants are added to raw materials in amounts from 0.2 up to 10 % by weight, according to various compacting or thickening techniques and according to the various final properties desired for the products obtained.

Powders so prepared are then subjected at room temperature to the selected forming process. Among the most widespread forming systems, the technique of compacting in press molds, extrusion, the employment of injection molds, and rolling can be mentioned. In all such cases, a certain pressure is exerted on the mixed powder, which as a consequence becomes denser but opposing to the pressure "P" a reaction force that increases almost exponentially with increasing the thickening degree and can be determined by the ratio "R" between the apparent density of the compacted powder and the theoretical density of the material employed.

The strong pressure exerted gives rise to remarkable frictional forces among the particles of the powder, as well as between the powder and the walls of the molds and of the forming equipment. Thus, some practical difficulties arise in compacting powder beyond a given limit, together with the difficulty of extracting the compacted powder out of molds because of the strong frictional forces with the walls, tendency to wear or to breaking of equipment, need for employing high quality powders which are much costlier, practical impossibility of producing articles of complicated shapes, and need for machines of the highest power available.

A process according to the usual technique for reducing such difficulties consists in employing powders heated up to 350-650°C in a non-oxidizing controlled atmosphere and poured into a mold containing a lubricant and previously heated up to 150-450°C for compacting said powders. However, such process is limited by the requirement of heating the powder up to a relatively high temperature and of employing a non-oxidizing atmosphere, as well as by the requirement of treating unlubricated powders and by the requirement of heating the mold and of lubricating the same previously, in addition to the need for controlling the atmosphere around the mold.

The object of the present invention consists in disclosing a process that allows:
- high temperatures for treating powders to be avoided;
- the employment of non-oxidizing, controlled atmospheres in the preparation of powders to be avoided;
- the employment of controlled atmospheres around the mold and other compacting equipment to be avoided;
- the previous heating of molds and other compacting equipment to be avoided;
- the direct lubrication of molds and other compacting equipment to be avoided;
- forces required to compact powders to be lowered;
- forces exerted for extracting the compacted powders out the molds to the reduced;
- the thickening degree practically obtainable to be increased;
- wear of molds and other forming equipment to be reduced;
- lower quality powders to be employed;
- more complex shapes to be realized;
- less powerful machines to be employed.

Stating the same as above more concisely, the process for compacting powders according to the present invention, after mixing powders with solid lubricants and liquid solvents, subjects said powders to pre-heating up to a temperature between the room temperature and the softening temperature of the lubricating agent employed.

According to the preferred embodiment of the process of the present invention, pre-heating occurs in controlled conditions with an oxidizing atmosphere, in particular with air.

Again according to the preferred embodiment of the invention, pre-heating occurs at a temperature between 70 and 120°C.

Further details and advantages of the present invention will be evident as the present disclosure will be further considered with reference to the enclosed drawings wherein:

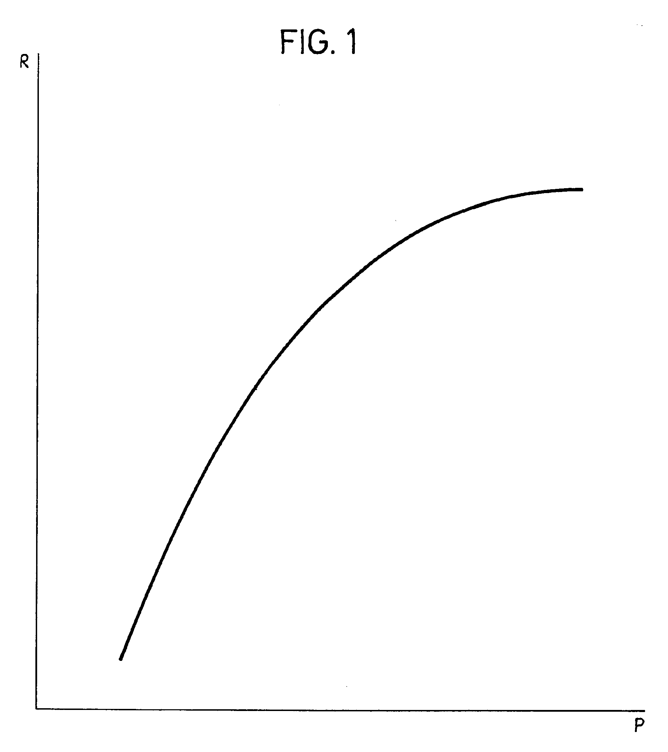

Figure 1 shows a typical plot of pressure P required for obtaining the desired degree of thickening R as a function of to said degree of thickening;
Figure 2 shows for exemplification purposes a typical behavior of R-P curves obtained by applying the present invention;
Figure 3 illustrates a plot that exemplifies the extraction forces E as a function of the degree of thickening R for powders at room temperature (curve 1) and for previously heated powders (curve 2).

As already mentioned above, the process of the present invention employs powders prepared by the addition of solid lubricants with or without a liquid additive. Solid lubricating additives are just those suggested by the common practice. The liquid additive consists of a paraffinic organic solvent. The preferred liquid as regards the present invention is lamp oil. The amounts of liquid to add to the powders for preparing the same can vary from 0 to 200 g/tonne of powder. The amounts of the solid lubricating agents can vary from 0.2 to 10 % by weight in the whole mixture. The powders and the agents added to the same are well mixed for a time sufficient to allow the powder particles and the lubricating additives to come in intimate contact. Thus the particles will be coated by a thin film of the lubricating agent, especially as a result of the liquid solvent action if the same is present.

Such powders, after the mixing operations mentioned above and before undergoing the compacting operation, are heated up to a temperature different from room temperature, anyway up to temperatures lower than the softening point of the lubricant.

For the lubricating agents mentioned above, such limit temperature is normally of 150°C, and the preferred values of temperature are within the range from 70 to 120°C. As powders are protected by the lubricating film and as temperature is relatively low, such heating can be carried out in the presence of an oxidizing atmosphere, for instance in the presence of air.

Thus a not previously heated mold which is not protected by a controlled, non-oxidizing atmosphere can also be employed. Moreover, the presence of a lubricating agent spread throughout the whole mass of powders allows the use of molds not previously lubricated.

Previous heating of the mixed powder allows the best lubrication conditions to be reached already in the first compacting steps, through the drastic reduction of frictional forces among the powder particles as well as between the powder and the walls. The lubricant, being more fluid, will show an increased tendency to flow from the pores towards the outside of the article so making it easier to compact the powder itself and lubricating better and more abundantly the contact surfaces between the powder and the walls of the mold or of the compacting equipment.

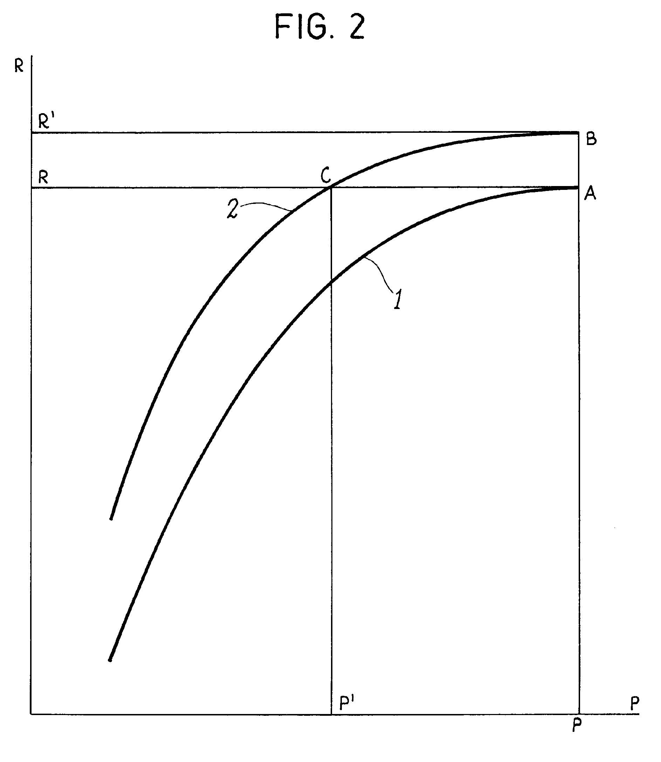

Figure 2 shows just for exemplification purposes a typical result of the application of the present invention. Curve 1 shows the behavior of the compacting pressure with respect to the degree of thickening or increase in density obtained in the case of a powder mixed with 0.5 % by weight of a lubricant, and employed at room temperature. Curve 2 shows such behavior in the case for the same powder but employed after heating it up to a temperature in the preferred range.

Figure 2 shows that if pressure P is required to obtain a given degree of thickening R employing the powder at room temperature (point A of curve 1), it is possible to obtain a degree of thickening R' larger than R with the same pressure P (point B of curve 2) or to obtain the same degree of thickening R but with pressure P' lower than pressure P (point C of curve 2) employing a powder previously heated according to the present finding.

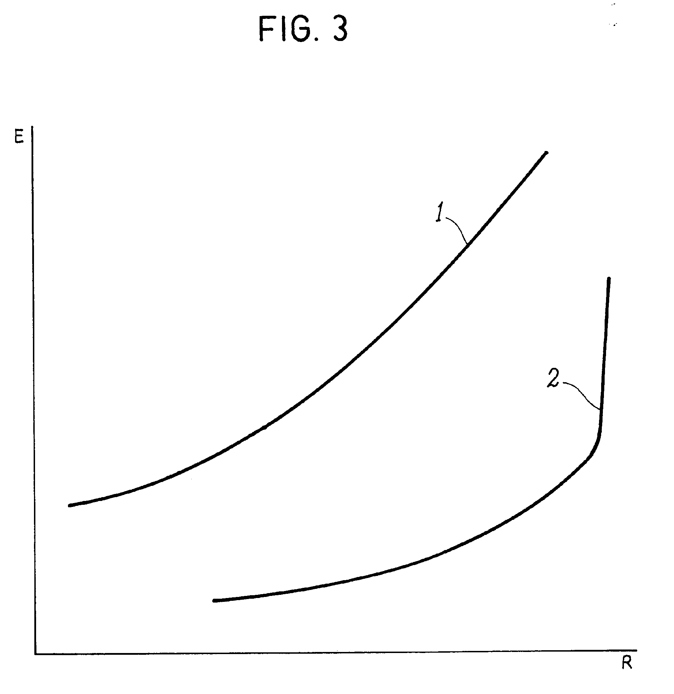

Similar improved results are obtained if the values of the forces required to extract the compacted or densified powders out of the molds are compared. Figure 3 shows a plot that exemplifies the extraction forces E as a function of the degree of thickening R in the case of powders treated at room temperature (curve 1) and in the case of powders previously heated (curve 2).

## Claims

1. A process for compacting or densifying powders in molds or other well known compacting, yet not previously heated and not previously lubricated systems, said process being characterized in that powders, after mixing the same with solid lubricants and liquid solvents, are previously heated up to a temperature between room temperature and the softening temperature of the lubricant employed.

2. A process according to claim 1, characterized in that pre-heating is carried out under controlled conditions in an oxidizing atmosphere, in particular in the air.

3. A process according to claims 1 and 2, characterized in that pre-heating is carried out preferably at a temperature between 70°C and 120°C.

4. A process according to any one of the preceding claims, characterized in that the lubricating additive is selected from lithium, zinc and other metal stearates, paraffins, waxes, natural or synthetic fat derivatives.

5. A process according to any one of the preceding claims, characterized in that the liquid additive is selected from paraffinic organic solvents preferably lamp oil.

6. A process according to claim 4, characterized in that the amount of the solid lubricating additive employed is between 0.2 and 10 % by weight of the whole mixture.

7. A process according to claim 5, characterized in that the amount of the liquid additive is between 0 and 200 g/tonne of powder.

## Patentansprüche

1. Verfahren zur Verdichtung oder zum Zusammenpressen von Pulver in Formen oder in anderen nicht vorerhitzten und nicht vorgeschmierten bekannten Anordnungen, dadurch gekennzeichnet, dass die Pulver, nach Vermischen mit festen Schmiermitteln und fluessigen Loesungsmitteln bis auf eine zwischen der Raumtemperatur und der Erweichungstemperatur des angewandten Schmiermittels liegenden Temperatur vorerhitzt wird.

2. Verfahren nach Anspruch 1, dadurch gekennzeichnet, dass die Vorerhitzung unter kontrollierten Bedigungen in einer oxidierenden Umgebung, insbesondere Luft durchgefuehrt wird.

3. Verfahren nach Anspruechen 1 und 2, dadurch gekennzeichnet, dass die Vorerhitzung vorzugsweise bei einer Temperatur von 70 bis 120°C durchgefuehrt wird.

4. Verfahren nach irgendeinem der vorhergehenden Anspruechen, dadurch gekennzeichnet, dass das Schmiermittel unter den Stearaten von Lithium, Zink oder anderen Metallstearaten, Paraffinen, Wachsen und natuerlichen oder synthetischen Fettderivaten ausgewaehlt wird.

5. Verfahren nach irgendeinem der vorhergehenden Anspruechen, dadurch gekennzeichnet, der fluessige Zusatzstoff ein organisches Paraffin-Loesungsmittel, verzugsweise Lampenoil ist.

6. Verfahren nach Anspruch 4, dadurch gekennzeichnet, dass das feste Schmiermittel in einer Menge von 0,2 bis 10 Gew.-% der ganzen Mischung zugegeben wird.

7. Verfahren nach Anspruch 5, dadurch gekennzeichnet, dass der fluessige Zusatzstoff in einer Menge von 0 bis 200 g/Tonne von Pulver zugegeben wird.

## Revendications

1. Procédé de compactage ou condensation des poudres dans des moules ou dans autres systèmes bien connus, non préchauffés et non prélubrifiés, caractérisé en ce que les poudres, après avoir étés mélangées avec des lubrifiants solides et solvants liquides, sont préchauffées jusqu'à une température entre la température ambiente et la température de rammollissement du lubricant utilisé.

2. Procédé selon la revendication 1, caractérisé en ce que le préchauffage est réalisé en conditions controllées dans un atmosphere oxidant, particulairment l'air.

3. Procédé selon les revendications 1 et 2, caractérisé en ce que le préchauffage est effectué de préférence à une température entre 70°C et 120°C.

4. Procédé selon quelconque des revendications précedentes, caractérisé en ce que l'addictif lubrifiante est choisis entre de stéarates de lithium, zinc et des autres métaux, paraffines, cires, dérivés des graisses naturelles ou synthetiques.

5. Procédé selon quelconque des revendications précedentes, caractérisée en ce que l'addictif liquide est choisis entre solvants organiques de paraffines, de préférence huil de lamp.

6. Procédé selon la revendication 4, caractérisé en ce que le lubrifiant solide est ajouté en quantité entre 0,2 et 10% en poids de la mélange entier.

7. Procédé selon la revendication 5, caractérisé en ce que le solvant liquide est ajouté en quantité entre 0 et 200 g/tonne de poudre.
